# EUROPÄISCHE PATENTANMELDUNG

(11) **EP 2 583 543 A1**
(43) Veröffentlichungstag der Anmeldung: **24.04.2013**
(21) Anmeldenummer: 12181387.7
(22) Anmeldetag: 22.08.2012
(51) Int. Cl.: A01B 63/112, A01B 63/14, B60C 23/00

(54) **Landwirtschaftliches Fahrzeug**

(30) Priorität: 21.10.2011 DE 102011085040
(71) Anmelder: DEERE & COMPANY, Moline, Illinois 61265-8098 (US)
(72) Erfinder: Bitter, Marcus, 44267 Dortmund (DE)
(74) Vertreter: Reichert, Christian

(57) **Zusammenfassung**

Es wird ein landwirtschaftliches Fahrzeug (10) beschrieben. Das Fahrzeug (10) umfasst eine Anhängevorrichtung (21), Mittel zur Ermittlung oder Angabe einer an der Anhängevorrichtung (21) wirkenden Zugkraft eines an die Anhängevorrichtung (21) anhängbaren Anbaugerätes, eine elektronische Steuereinheit (62) zur Regelung der Zugkraft in Abhängigkeit von der Arbeitstiefe eines an die Anhängevorrichtung (21) anhängbaren Anbaugerätes, Mittel zur Ermittlung oder Angabe eines Schlupfes zwischen Boden (11) und Reifen (18, 20) des Fahrzeugs (10) und eine elektropneumatische Reifendruckregelanlage (16). Um optimale Reifendruckeinstellungen für verschiedene Betriebszustände zu automatisieren wird vorgeschlagen, dass die Reifendruckregelanlage (16) eine elektronische Steuereinheit (22) zur Regelung eines Reifendrucks umfasst und der Reifendruck in Abhängigkeit von der Zugkraft oder der Arbeitstiefe und vom Schlupf regelbar ist.

## Beschreibung

Die Erfindung betrifft ein landwirtschaftliches Fahrzeug mit einer Anhängevorrichtung, Mittel zur Ermittlung oder Angabe einer an der Anhängevorrichtung wirkenden Zugkraft eines an die Anhängevorrichtung anhängbaren Anbaugerätes, eine elektronische Steuereinheit zur Regelung der Zugkraft in Abhängigkeit von der Arbeitstiefe eines an die Anhängevorrichtung anhängbaren Anbaugerätes, Mittel zur Ermittlung oder Angabe eines Schlupfes zwischen Boden und Reifen des Fahrzeugs, und einer elektropneumatische Reifendruckregelanlage.

Es ist bekannt Reifendruckregelanlagen an landwirtschaftlichen Fahrzeugen, wie Schlepper oder Traktoren, oder an anderen landwirtschaftlichen Fahrzeugen einzusetzen, die es dem Bediener des Fahrzeugs ermöglichen von seinem Fahrersitz aus den Reifendruck für Straßenfahrt auf einen optimalen Wert anzuheben und für Feldarbeiten, je nach Untergrund auf dem Feld, auf einen optimalen Druck abzulassen, ohne dass der Fahrer seinen Arbeitsplatz verlassen oder gar zu einer Reifendruckbefüllanlage fahren muss. Ähnliche automatische Systeme sind bereits aus der Nutzfahrzeug- und Automobilindustrie bekannt, wobei hier fahrzeuginterne Sensoren von anderen Systemen wie Antiblockiersystemen (ABS) oder elektronischer Schlupfkontrolle (ESP) genutzt werden, um den optimalen Reifendruck einzustellen. Im Gegensatz zu Nutzfahrzeugen und Personenkraftwagen werden landwirtschaftliche Fahrzeuge jedoch von weiteren Faktoren beeinflusst, wie beispielsweise die Beschaffenheit des Untergrunds oder eine arbeitsbedingte Zugkraftbereitstellung, die gesondert betrachtet werden müssen. Diese Faktoren werden durch die oben genannten Systeme nicht erfasst oder berücksichtigt, so dass derartige bekannte Systeme nicht ohne Weiteres auf landwirtschaftliche Fahrzeuge übertragbar sind.

Ferner ist es bekannt bei landwirtschaftlichen Fahrzeugen mit Anbaugeräten, insbesondere Bodenbearbeitungsgeräten, mittels Fahrzeug-Kraftheber-Regelsystemen, eine Schlupfregelung bereitzustellen, wobei mittels Sensoren oder anderer Einrichtungen die Raddrehzahl und tatsächliche Fahrgeschwindigkeit über dem Boden erfasst und der Schlupf zwischen Rad und Boden ermittelt wird. Dadurch kann die Arbeitstiefe eines gezogenen Anbaugerätes, wie Pflug, Grubber, oder einem anderen Bodenbearbeitungsgerät, so angepasst werden, dass sich ein optimaler, vom Bediener vorgebbarer, Betriebspunkt einstellt. Der optimale Schlupf ist dabei wesentlich von der Untergrundbeschaffenheit, der Reifenart sowie dem Luftdruck in den Reifen abhängig. Wird der Schlupf zu groß, wird die Zugkraft des Fahrzeugs verringert, indem das Anbaugerät so weit angehoben wird, bis sich wieder ein optimaler Schlupf einstellt. Wird hingegen der Schlupf zu gering, wird die Zugkraft des Fahrzeugs erhöht, indem das Anbaugerät weiter in den Boden abgesenkt wird, bis sich wieder ein optimaler Schlupf einstellt.

Um die Zugkraft und den Schlupf bei Feldarbeit zu optimieren, kann vom Betreiber des Fahrzeugs der Luftdruck in den Reifen den gerade herrschenden Bodenbedingungen, mit oder ohne Hilfe eines Reifendruckregelsystems, angepasst werden. Bis zum jetzigen Zeitpunkt ist es nicht bekannt, dies automatisiert für ein landwirtschaftliches Fahrzeug bereitzustellen.

Die der Erfindung zugrunde liegende Aufgabe wird darin gesehen, ein landwirtschaftliches Fahrzeug der eingangs genannten Art bereitzustellen, durch welches eine automatisierte Optimierung zwischen Zugkraft, Schlupf und Reifendruck ermöglicht wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein landwirtschaftliches Fahrzeug der eingangs genannten Art derart ausgebildet, dass die Reifendruckregelanlage eine elektronische Steuereinheit zur Regelung eines Reifendrucks umfasst und der Reifendruck in Abhängigkeit von der Zugkraft und/oder der Arbeitstiefe und/oder vom Schlupf regelbar ist. Dadurch kann anhand der Werte einer durch die elektronische Steuereinheit zur Regelung der Zugkraft (bzw. zur Regelung der Arbeitstiefe) des Anbaugerätes bereitgestellten Regelung der Schlupf durch Veränderung des Reifendrucks optimiert bzw. verändert werden, so dass eine Veränderung der Zugkraft nicht zwangsläufig eine Veränderung der Arbeitstiefe nach sich zieht. Durch Veränderung des Reifendrucks kann der Schlupf konstant gehalten, wobei dann Veränderungen in der Zugkraft durch sich ändernde Bodenverhältnisse ausgeglichen werden können. Der Reifendruck kann damit derart variiert werden, dass sich ein optimaler Betriebspunkt für Arbeiten auf dem Feld oder bei Straßenfahrt automatisch einstellt. Die Erfindung sieht dabei vor, die an sich bekannten Reifendruckregelanlagen mit den an sich bekannten Fahrzeug-Kraftheber-Regelsystemen (Zugkraft- bzw. Arbeitstiefenregelung) zu kombinieren, so dass sich die Vorteile beider Systeme ergänzen. Es wird hierbei darauf abgestellt, den Reifendruck in Abhängigkeit von Zugkraft oder Schlupf zu verändern, wobei dies im Rahmen der technischen Möglichkeiten bezüglich einer Evakuierung oder Befüllung einer entsprechenden Luftmenge an den Reifen erfolgen soll. Es wird dabei vorgesehen, den Reifendruck anhand von gemittelten Werten aus der Arbeitstiefenregelung bzw. Schlupfregelung den herrschenden Bedingungen optimal anzupassen indem der Reifendruck situationsbedingt erhöht oder verringert wird, während sich bei einer bestimmte Arbeitstiefe eines Anbaugeräts eine entsprechend der herrschenden Bedingungen zwischen Boden und Reifen bestimmte Zugkraft und/oder ein bestimmter Schlupf einstellt.

Anhand eines Regelalgorithmus werden ermittelte oder vorgebbare Größen für die Arbeitstiefe des Anbaugerätes (Lage des Anbaugerätes), für die Zugkraft an der Anhängevorrichtung (beispielsweise an den Unterlenkern einer Dreipunkt-Anhängevorrichtung) und für den Schlupf an den Reifen des Fahrzeugs berücksichtigt, mit entsprechenden Soll- bzw. Richtwerten verglichen und der Reifendruck vom System automatisch angepasst, indem der Druck entweder erhöht oder verringert wird. Dabei kann in Abhängigkeit von der Ermittlung der oben genannten Größen vom System eine Voreinstellung vorgesehen sein, die veranlasst, dass der Luftdruck in den Reifen erhöht oder abgelassen werden soll. Entsprechend dieser Voreinstellung wird das Regelsystem aufgrund des gemittelten Schlupfwertes feststellen, ob sich die Veränderung des Luftdrucks in den Reifen zum Positiven oder Negativen hin verändert und entsprechend eine angesteuerte Luftdruckveränderungsrichtung beibehalten bzw. umkehren. Je nach Feinfühligkeit und Robustheit des Regelalgorithmus und nach technischer Gegebenheit der Reifendruckregelanlage kann die Geschwindigkeit der Reifendruckveränderung unterschiedlich schnell erfolgen, um den optimalen Betriebspunkt des Fahrzeugs einzustellen.

Die Mittel zur Ermittlung oder Angabe des Schlupfes können einen Radarsensor oder auch ein Positionsbestimmungssystem (GPS) umfassen. Der Schlupf kann dann mittels eines für landwirtschaftliche Fahrzeuge (wie beispielsweise Schlepper bzw. Traktoren) üblichen Radarsensors oder mit Hilfe von in der Landwirtschaft üblichen Positionsbestimmungs-Systemen bestimmt und als Regelgröße verwendet werden. Je nachdem wie groß der gerade herrschende Schlupf ist, kann der Reifendruck unter Zugrundelegung des durch die elektronische Steuereinheit der Reifendruckregelanlage vorgegebenen Regelalgorithmus erhöht oder verringert werden, indem Luft in die Reifen zugeführt oder aus ihnen evakuiert wird.

Die Mittel zur Ermittlung oder Angabe der Zugkraft können einen an der Anhängevorrichtung angeordneten Kraftsensor umfassen, der beispielsweise an einem der Unterlenker einer Dreipunkt-Anhängevorrichtung angeordnet sein kann. Als Kraftsensoren können beispielsweise Zug-Drucksensoren oder auch Dehnungsmessstreifen eingesetzt werden.

Ferner können Mittel zur Ermittlung einer Arbeitstiefe eines an die Anhängevorrichtung anhängbaren Anbaugerätes vorgesehen sein. Die Mittel zur Ermittlung oder Angabe der Arbeitstiefe können einen an einer Anhängevorrichtung angeordneten Lagesensor oder Positionssensor umfassen. Die Arbeitstiefe kann dann mittels des für landwirtschaftliche Fahrzeuge (wie beispielsweise Schlepper bzw. Traktoren) üblichen Lagesensors bestimmt und als Regelgröße in der elektronischen Steuereinheit zur Regelung der Zugkraft oder aber auch zur Regelung des Schlupfes bzw. zur Regelung des Reifendrucks verwendet werden. Je nach Größe der Zugkraft und/oder des gerade herrschenden Schlupfes und/oder der gerade vorliegenden Arbeitstiefe, kann der Reifendruck unter Zugrundelegung des durch die elektronische Steuereinheit der Reifendruckregelanlage vorgegebenen Regelalgorithmus erhöht oder verringert werden, indem Luft in die Reifen zugeführt oder aus ihnen evakuiert wird. Die angegebenen Größen Zugkraft, Schlupf und Arbeitstiefe stehen dabei in Wechselwirkung zueinander.

Ferner können Mittel zur Ermittlung der Fahrgeschwindigkeit, beispielsweise Drehzahlsensoren, vorgesehen und der Reifendruck in Abhängigkeit der Fahrgeschwindigkeit regelbar sein. Es können darüber hinaus auch Mittel zur Ermittlung der Achslasten, beispielsweise Kraftsensoren (Drucksensoren, Dehnungsmessstreifen etc.) vorgesehen und der Reifendruck in Abhängigkeit der Fahrgeschwindigkeit bzw. der Achslast am Fahrzeug regelbar sein. So kann anhand der Fahrgeschwindigkeit festgelegt werden, was ein optimaler Reifendruck ist, wenn aufgrund der Fahrgeschwindigkeit Rückschlüsse angestellt werden, die darauf schließen lassen, dass sich das Fahrzeug auf einer Straße oder zumindest nicht im schweren Zugbetrieb oder auf dem Feld befindet. Hier kann der Reifendruck auf den für Transportarbeiten oder eben für Zugarbeiten optimalen Reifendruck als übergeordnete Regelung verändert werden. Ob eine derartige übergeordnete Regelung greifen soll kann beispielsweise durch die Bedienperson über die genannte Eingabeeinrichtung eingegeben werden.

Im Fahrzeug kann ferner eine Eingabeeinrichtung vorgesehen sein, mittels der Steuergrößen für eine oder mehrere der Steuereinheiten vorgebbar sind, wobei die Steuergrößen auch die im Regelalgorithmus enthaltenen Größen umfassen kann, so dass, je nach Anwendung und Belieben des Betreibers, gewisse bzw. bestimmte Größen als Zielwerte oder auch als Konstanten vorgegeben werden können. Die Eingabeeinrichtung kann beispielsweise in der Kabine des Fahrzeugs installiert sein, so dass eine Bedienperson Eingaben machen kann, die der Regelung, sei es der Reifendruckregelung oder der Zugkraftregelung, ebenfalls zu Grunde gelegt werden. Beispielsweise kann die Bedienperson einen Zielschlupfwert, einen nicht zu unterschreitenden bzw. zu überschreitenden Schlupfwert, eine nicht zu überschreitende bzw. zu unterschreitende Zugkraft bzw. Arbeitstiefe oder auch einen nicht zu überschreitenden bzw. zu unterschreitenden Reifendruck vorgeben oder andere Parameter, die bei einer Regelung berücksichtigt werden sollen.

In wenigstens einer der Steuereinheiten kann wenigstens ein einen Regelalgorithmus definierende mathematische Gleichung oder wenigstens ein Kennfeld abgelegt sein, durch welche/welches ein oder mehrere der Parameter, die direkt oder indirekt einen Einfluss auf den Schlupf haben können, berücksichtigt werden. Insbesondere können für eine elektronische Steuerung bzw. Regelung der Zugkraft oder des Reifendrucks, folgende Parameter in ihren Variationen im Regelaqlgorithmus enthalten sein bzw. in einer mathematischen Gleichung oder in einem Kennfeld berücksichtigt werden:
Reifenart, Bodenart, Bodenbeschaffenheit, Geschwindigkeit oder auch eine Achslastverteilung am Fahrzeug. Es kann aber auch ein möglichst allgemeingültiges Kennfeld als Steueralgorithmus in der elektronischen Steuereinheit abgelegt sein, so dass ein bestimmter Schlupfwert oder ein von einer Bedienperson vorgegebener Schlupfwert unter Zugrundelegung konstanter Parameter durch einfache Veränderung des Reifendrucks und ohne Berücksichtigung einer Änderung einer oder mehrerer Parameter eingehalten wird, wobei naturgemäß der Reifendruck bei gleichbleibender Arbeitstiefe abgesenkt wird, wenn der Schlupfwert die Zielgröße überschreitet und umgekehrt. Die Reifendruckregelung kann von der Bedienperson über die Eingabeeinrichtung oder über einen Aktivierungsschalter aktiviert werden,
wenn dies gewünscht wird, oder wenn beispielsweise bei voreingestellten Parameter die Betriebsbedingungen entsprechend sind und eine Reifendruckregelung sinnvoll erscheint. Darüber hinaus können jedoch auch Veränderungen und Variationen der oben genannten Parameter in dem wenigstens einen Kennfeld (oder in weiteren Kennfeldern, die in den elektronischen Steuereinheiten abgelegt sind) ihren Niederschlag finden, so dass beispielsweise ferner die Reifenart berücksichtigt wird.
Dabei kann die Bedienperson entsprechende Vorgaben wie Reifenhersteller, Reifengröße, Reifenbreite, Bauart, Profil, etc. mittels der Eingabeeinrichtung der elektronischen Steuereinheit vorgeben, so dass ein entsprechender, die Reifenart berücksichtigender Algorithmus aufgerufen und der Reifendruckregelung zugrundegelegt wird. So kann ein für die jeweilige Reifenart optimaler Schlupfwert durch Variieren des Reifendrucks geregelt werden ohne beispielsweise die Arbeitstiefe verändern zu müssen bzw. ohne dass sich die Zugkraft wesentlich ändert. Ferner kann auch die Bodenart (bei Bedarf auch zusätzlich) berücksichtigt werden. So kann beispielsweise Sand, Lehm, Gras, Stoppelfeld, etc. als Parametervorgabe berücksichtigt werden, was ebenfalls von der Bedienperson einzugeben wäre, oder auch von einem allgemein bekannten GPS-Kartierungssystem geleistet werden könnte. Entsprechende unterschiedliche Algorithmen zur Regelung des Reifendrucks in Abhängigkeit des Schlupfes für die Fahrt auf Sand sowie für die Fahrt auf Lehm, Gras oder Stoppelfeld, etc. können in der elektronischen Steuereinheit abgelegt sein. Ein weiterer Parameter, der auf die optimale Auswahl des Regelalgorithmus Einfluss haben kann ist die Bodenbeschaffenheit (gelockert, festgefahren, nass, feucht, trocken, etc.). Auch die Bodenbeschaffenheit kann vom Bediener entsprechend vorgegeben werden und bei der Auswahl eines geeigneten Regelalgorithmus bzw. in dem Regelalgorithmus berücksichtigt werden. Ferner kann auch die Fahrgeschwindigkeit als Parameter Berücksichtigung finden. Die Fahrgeschwindigkeit kann dabei über die vorhandenen Sensoren ermittelt und an die elektronische Steuereinheit gegeben oder auch aus der Schlupfmessung selbst abgeleitet und an die elektronische Steuereinheit gegeben werden. Des Weiteren kann auch eine Achslastverteilung als Parameter in dem Regelalgorithmus berücksichtigt werden, wobei die Achslast entweder durch zusätzliche Sensoren oder durch die ohnehin vorhandenen Reifenluftdrücke ermittelt werden kann.

Auch andere Daten, die hier nicht weiter genannt werden, jedoch aufgrund der zunehmenden Professionalisierung in der Landwirtschaft über beispielsweise GPS geliefert werden können, oder in Kartierungssystemen aus Ergebnissen von Bodenuntersuchungen hinterlegt wurden, können zusätzlich als Input für den Regelalgorithmus verwendet werden. Es ist auch denkbar, über die Eingabeeinrichtung eine Kombination mit einer Schwingungstilgung für die Anhängevorrichtung vorzusehen, so dass bei Aktivieren der Schwingungstilgung, die in der Regel für Transportfahrten vorgesehen ist, ein entsprechender Algorithmus des Steuersystems dieses als Signal für Straßenfahrt interpretiert und den Reifendruck auf den für Straßenfahrt optimalen Wert automatisch einstellt und eine Arbeitstiefen-, Zugkraft- und/oder Schlupfregelung deaktiviert, wobei eine spätere Aktivierung der genannten Regelsysteme wieder über die Eingabeeinrichtung erfolgen kann. Denkbar ist auch, dass anhand von GPS-Daten erkannt wird, dass sich das Fahrzeug auf einem Wirtschaftsweg befindet, und daher der Reifendruck automatisch auf optimalen Straßenfahrtdruck angepasst wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

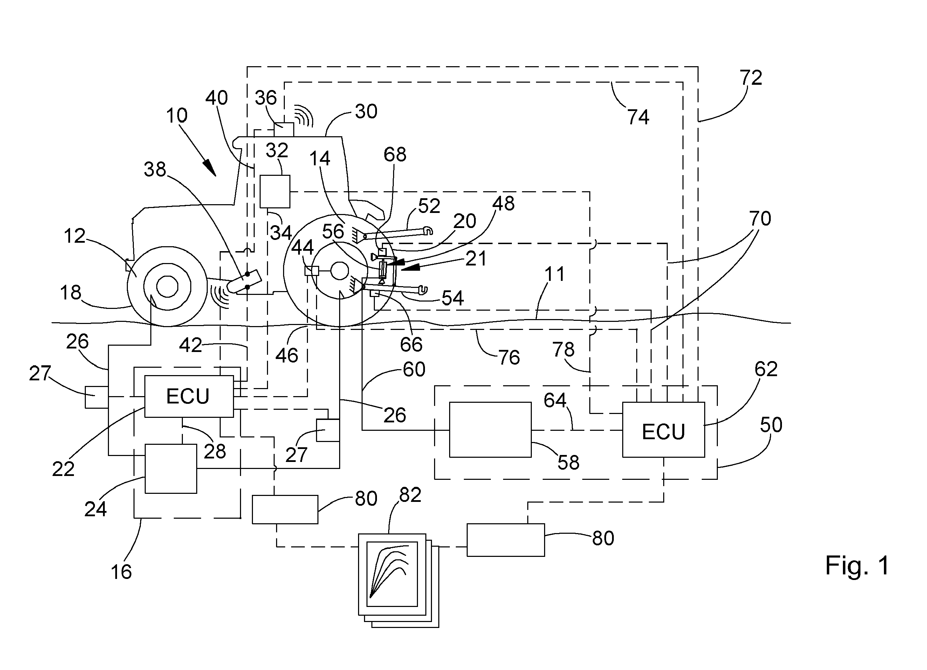

- Fig. 1: ein schematisches Blockschaltbild für ein erfindungsgemäßes landwirtschaftliches Fahrzeug

Die Figur 1 zeigt ein landwirtschaftliches Fahrzeug in Form eines Traktors 10. Es kann sich hierbei auch um ein anderes landwirtschaftliches Fahrzeug handeln, beispielsweise um eine selbstfahrende Feldspritze oder auch um eine Erntemaschine. Der Traktor 10 umfasst Vorderräder 12 sowie Hinterräder 14, über die er sich auf einem Untergrund 11 (Boden, Straße, Feld) abstützt, die mit einer elektro-pneumatischen Reifenbefüllanlage 16 verbunden sind. Die Reifenbefüllanlage 16 dient zum Befüllen oder Entlüften von auf den Rädern 12, 14 angeordneten Reifen 18, 20, wobei die Räder 12, 14 jeweils mit entsprechenden Drehdurchführungen (nicht gezeigt) verbunden sind, die ein Befüllen und Entlüften der Reifen 18, 20 während der Fahrt des Traktors 10 ermöglichen. Am hinteren Teil des Traktors 10 ist eine Anhängevorrichtung 21 zum Anhängen eines Anbaugerätes (nicht gezeigt) vorgesehen.

Die Reifenbefüllanlage 16 umfasst eine elektronische Steuereinheit 22, sowie eine pneumatische Einrichtung 24, welche alle notwendigen pneumatischen Komponenten einer Reifenbefüllanlage 16 umfassen soll (Kompressor, bzw. pneumatische Pumpe mit Luftspeicher, elektromagnetische Ventil- oder Schalteinrichtungen etc.). Reifenbefüllanlagen 16 sind dem Fachmann aus dem Stand der Technik bekannt und brauchen hier nicht weiter ausgeführt zu werden. Die pneumatische Einrichtung 24 ist über Pneumatikleitungen 26 mit den Rädern 12, 14 verbunden. Ferner sind in der pneumatischen Einrichtung 24 bzw. in den Pneumatikleitungen 26 Drucksensoren 27 vorgesehen, die den Luftdruck in den Reifen 18, 20 erfassen und gegebenenfalls der elektronischen Steuereinheit vorgeben. Die elektronische Steuereinheit 22 ist über eine Steuerleitung 28 mit der pneumatischen Einrichtung 24, bzw. mit den dort angeordneten elektromagnetischen Ventil- oder Schalteinrichtungen, verbunden.

Der Traktor 10 umfasst ferner ein Kabine 30, in der eine Eingabeeinrichtung 32 angeordnet ist, über die eine Bedienperson Angaben zur automatischen Ansteuerung der Reifenbefüllanlage 16 eingeben kann. Die Eingabeeinrichtung 32 ist elektronisch über eine Eingabesteuerleitung 34 oder per Funk mit der elektronischen Steuereinheit 22 verbunden.

Der Traktor 10 umfasst ferner ein Positionsbestimmungssystem 36, beispielsweise ein GPS-System, und/oder einen Radarsensor 38, die jeweils ebenfalls über entsprechende Steuerleitungen 40 bzw. 42, oder auch auf andere bekannte Weise, mit der elektronischen Steuereinheit 22 verbunden sind.

Ferner ist am Hinterrad 14 des Traktors 10 ein Fahrgeschwindigkeitssensor in Form eines Drehzahlsensors 44 vorgesehen, der über eine weitere Steuerleitung 46 mit der elektronischen Steuereinheit 22 verbunden ist.

Die Anhängevorrichtung 21 umfasst ein hydraulisches Hubwerk 48, welches über ein elektrohydraulisches Kraftheber-Regelsystem 50 betätigbar ist. Die Anhängevorrichtung 21 ist als Dreipunkt-Anhängevorrichtung ausgebildet und umfasst einen Oberlenker 52 sowie zwei Unterlenker 54, welche mit dem hydraulischen Hubwerk 48 verbunden sind. Das Hubwerk 48 weist einen Hydraulikzylinder 56 (Kraftheber) auf, der über das Kraftheber-Regelsystem 50 mittels einer elektrohydraulischen Einrichtung 58 ansteuerbar ist. Die elektrohydraulische Einrichtung 58 weist alle notwendigen hydraulischen Komponenten für die Versorgung und Ansteuerung des Hubwerks 48 bzw. des Hydraulikzylinders 56 auf (Hydraulikpumpe, gegebenenfalls Hydraulikspeicher, elektromagnetische Ventil- oder Schalteinrichtungen etc.). Derartige Hubwerke 48 sowie entsprechende elektrohydraulische Einrichtungen 58 zur Ansteuerung sind dem Fachmann aus dem Stand der Technik bekannt und brauchen hier nicht weiter ausgeführt zu werden. Die elektrohydraulische Einrichtung 58 bzw. das Kraftheber-Regelsystem ist über eine Hydraulikleitung 60 mit dem Hydraulikzylinder 56 verbunden. Eine elektronische Steuereinheit 62 zur Ansteuerung des Hydraulikzylinders 56 dient gleichzeitig als elektronische Steuereinheit zur Regelung einer Zugkraft in Abhängigkeit von der Arbeitstiefe eines an die Anhängevorrichtung 21 anhängbaren Anbaugerätes. Die elektronische Steuereinheit 62 zur Regelung der Zugkraft ist über eine Steuerleitung 64 mit der elektrohydraulischen Einrichtung 58, bzw. mit den dort angeordneten elektromagnetischen Ventil- oder Schalteinrichtungen, verbunden. Ferner ist an dem Unterlenker der Anhängevorrichtung 21 ein Zugkraftsensor 66 angeordnet, welcher beispielsweise als Dehnungsmessstreifen ausgebildet sein kann. Das Hubwerk 48 ist mit einem Lagesensor 68 versehen, der beispielsweise als Winkelsensor ausgebildet sein kann. Der Zugkraftsensor 66 und der Lagesensor 68 sind über Sensorleitungen 70 mit der elektronischen Steuereinheit 62 verbunden. Ferner ist die elektronische Steuereinheit 62 über Steuerleitungen 72, 74 und 76 mit dem Radarsensor 38, dem Positionsbestimmungssystem 36 und dem Drehzahlsensor 44 (Fahrgeschwindigkeitssensor), sowie über eine Steuerleitung 78 mit der Eingabeeinrichtung 32 verbunden.

Des Weiteren umfassen die elektronischen Steuereinheiten 22, 62 jeweils ein Speichermodul 80, in denen jeweils ein oder mehrere Kennfelder 82 abgelegt sind, die zur Generierung von Steuersignalen zur Ansteuerung der elektromagnetischen Ventile in der pneumatischen Einrichtung 24 der Reifenbefüllanlage 16 und/oder zur Generierung von Steuersignalen zur Ansteuerung der elektromagnetischen Ventile des elektrohydraulischen Kraftheber-Regelsystems 50 der Anhängevorrichtung 21 herangezogen werden.

Der Traktor 10 stützt sich über die mit einem bestimmten Luftdruck befüllten Reifen 18, 20 auf einem Untergrund (wie beispielsweise Gras, Stoppelfeld, Ackerboden, Sand, Lehm, Straße etc.) ab, wobei bei einem Fortbewegen des Traktors 10 über den Untergrund sich zwischen Reifen 18, 20 und Untergrund ein Schlupf bzw. ein Schlupfwert einstellt. Der Schlupfwert wird mithilfe des Positionsbestimmungssystems 36 oder des Radarsensors 38 in Verbindung mit der über den Drehzahlsensor 44 ermittelten Drehzahl der Räder 14 ermittelt, wobei erstere eine im wesentlichen tatsächliche Geschwindigkeit des Traktors 10 messen bzw. ermitteln und über die Drehzahl der Räder 14 und deren geometrischen Abmessungen eine mit Schlupf behaftete Geschwindigkeit des Traktors 10 gemessen bzw. ermittelt wird. Die Differenz bzw. das Verhältnis beider Geschwindigkeiten lässt im Wesentlichen direkt auf den Schlupfwert schließen, der zur Ansteuerung der Reifenbefüllanlage 16 und damit zur Regelung des Reifendrucks herangezogen wird, bzw. zur Ansteuerung des Kraftheber-Regelsystems 50 und damit zur Regelung der an der Anhängevorrichtung 21 wirkendenden Zugkraft bzw. der Arbeitstiefe eines an die Anhängevorrichtung 21 angehängten Anbaugerätes (nicht gezeigt).

Entsprechend dem oben beschriebenen Ausführungsbeispiel ist es möglich, in Abhängigkeit von der Zugkraft und/oder der Arbeitstiefe und/oder vom Schlupf den Reifendruck zu regeln. Anhand der von den Sensoren ermittelten oder durch den Bediener eingegebenen Werte für Zugkraft, Arbeitstiefe und Schlupf, kann die durch die elektronische Steuereinheit 22, 62 bereitgestellte Regelung der Schlupf oder die Zugkraft bzw. die Arbeitstiefe konstant gehalten werden. Dazu kann der Reifendruck derart verändert werden, dass der sich einstellende Schlupf unverändert bleibt und die von dem Fahrzeug aufbringbare bzw. aufzubringende Zugkraft oder Arbeitstiefe des Anbaugerätes bedarfsgerecht erhöht bzw. reduziert werden kann. So kann insgesamt ein optimaler Betriebspunkt für Arbeiten auf dem Feld oder bei Straßenfahrt automatisch eingestellt werden. Die Erfindung sieht dabei vor, die an sich bekannten Reifendruckregelanlagen 16 mit den an sich bekannten Fahrzeug-Kraftheber-Regelsystemen 50 (Zugkraft- bzw. Arbeitstiefenregelung) zu kombinieren, so dass sich die Vorteile beider Systeme ergänzen. Wie eingangs schon erwähnt, wird hierbei darauf abgestellt, den Reifendruck in Abhängigkeit von Zugkraft oder Schlupf zu verändern, wobei dies im Rahmen der technischen Möglichkeiten bezüglich einer Evakuierung oder Befüllung einer entsprechenden Luftmenge an den Reifen erfolgt. Es wird dabei vorgesehen, den Reifendruck anhand von gemittelten Werten aus der Arbeitstiefenregelung bzw. Schlupfregelung den herrschenden Bedingungen optimal anzupassen indem der Reifendruck situationsbedingt erhöht oder verringert wird, während sich bei einer bestimmte Arbeitstiefe eines Anbaugeräts eine entsprechend der herrschenden Bedingungen zwischen Boden 11 und Reifen 18, 20 bestimmte Zugkraft und/oder ein bestimmter Schlupf einstellt.

Der Reifendruck kann ferner nur in Abhängigkeit von dem Schlupf oder nur in Abhängigkeit von der Zugkraft oder von der Arbeitstiefe geregelt werden, dass heißt durch ein allgemein gültiges Kennfeld 82, bzw. durch einen vorgegeben mathematischen bzw. physikalischen Zusammenhang, der verschiedene konstant angenommene Parameter berücksichtigt wie, Reifenart, Bodenart, Bodenbeschaffenheit, Geschwindigkeit oder auch eine Achslastverteilung am Fahrzeug. Über die Eingabeeinrichtung 32 ist es dann möglich, die Reifendruckregelung bzw. eine Zugkraftregelung oder eine Arbeitstiefenregelung zu aktivieren bzw. zu deaktivieren, wenn dies erwünscht ist. So kann beispielsweise ein allgemeingültiges Kennfeld 82 für den Feldbetrieb erstellt worden sein oder auch für die Fahrt auf der Straße. Sollte der Betriebszustand nicht den Bedingungen des allgemeingültigen Kennfeldes entsprechen, dann kann die entsprechende Regelung abgeschaltet werden.

Darüber hinaus können auch Veränderungen und Variationen der oben genannten Parameter in dem wenigstens einen Kennfeld 82 (oder in weiteren Kennfeldern, die in den elektronischen Steuereinheiten 22, 62 abgelegt sind) ihren Niederschlag finden, so dass beispielsweise ferner die Reifenart berücksichtigt wird. Dabei kann die Bedienperson entsprechende Vorgaben wie Reifenhersteller, Reifengröße, Reifenbreite, Bauart, Profil, etc. mittels der Eingabeeinrichtung 32 der einen oder beiden elektronischen Steuereinheiten 22, 64 vorgeben, so dass ein entsprechender, die Reifenart berücksichtigender Algorithmus aufgerufen und der Reifendruckregelung bzw. der Zugkraft oder Arbeitstiefenregelung zugrundegelegt wird. So kann ein für die jeweilige Reifenart optimaler Schlupfwert durch Variieren des Reifendrucks geregelt werden.

Ferner kann auch die Bodenart (bei Bedarf auch zusätzlich) berücksichtigt werden. So kann beispielsweise Sand, Lehm, Gras, Stoppelfeld, etc. als Parametervorgabe über die Eingabeeinrichtung 32 von der Bedienperson berücksichtigt werden. Ferner ist es möglich, dass in der Eingabeeinrichtung 32 ein inzwischen in der Landwirtschaft etabliertes GPS-Kartierungssystem integriert ist und die genannten Parameter über eine elektronische Verbindung 84 im Zusammenspiel mit dem Positionsbestimmungssystem 36 automatisch vorgegeben werden. Beispielsweise sind unterschiedliche Algorithmen zur Regelung des Reifendrucks in Abhängigkeit des Schlupfes für die Fahrt auf Sand sowie für die Fahrt auf Lehm, Gras oder Stoppelfeld, etc. in der elektronischen Steuereinheit 22abgelegt.

Ein weiterer Parameter, der auf die optimale Auswahl des Regelalgorithmus Einfluss haben kann, ist die Bodenbeschaffenheit (gelockert, festgefahren, nass, feucht, trocken, etc.). So ist auch dies in separaten Kennfeldern 82 in der oder den Steuereinheiten 22, 62 als Algorithmus abgelegt, so dass die Bodenbeschaffenheit als Variable vom Bediener entsprechend vorgegeben werden kann.

Ferner kann auch die Fahrgeschwindigkeit als Parameter Berücksichtigung finden. Die Fahrgeschwindigkeit wird dabei über den Drehzahlsensor 44 oder über den Radarsensor 38 oder auch über das Positionsbestimmungssystem 36 laufend ermittelt und an die Steuereinheit 22, 62 gegeben. Es ist auch vorgesehen, dass die Reifendruckregelung nur dann vorgenommen wird, wenn die Fahrgeschwindigkeit für einen gewissen Zeitraum über oder unter einen gewissen Wert liegt, wodurch dann ein Übergang von Feldarbeit auf Fahrt auf der Straße, oder umgekehrt, angenommen und der Reifendruck entsprechend festeingestellter Werte oder durch den Bediener über die Eingabeeinrichtung 32 einstellbarer Werte angepasst wird.

Des Weiteren kann auch eine Achslastverteilung als Parameter in dem Regelalgorithmus über entsprechende Kennfelder 82 berücksichtigt werden, wobei die Achslast entweder durch zusätzliche Sensoren (nicht gezeigt) oder durch die ohnehin vorhandenen Reifenluftdrücke über die Drucksensoren 27 ermittelt und der elektronischen Steuereinheit 22, 62 vorgegeben werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Landwirtschaftliches Fahrzeug (10) mit einer Anhängevorrichtung (21), Mittel zur Ermittlung oder Angabe einer an der Anhängevorrichtung (21) wirkenden Zugkraft eines an die Anhängevorrichtung (21) anhängbaren Anbaugerätes, eine elektronische Steuereinheit (62) zur Regelung der Zugkraft in Abhängigkeit von der Arbeitstiefe eines an die Anhängevorrichtung (21) anhängbaren Anbaugerätes, Mittel zur Ermittlung oder Angabe eines Schlupfes zwischen Boden (11) und Reifen (18, 20) des Fahrzeugs (10), und einer elektropneumatische Reifendruckregelanlage (16), **dadurch gekennzeichnet, dass** die Reifendruckregelanlage (16) eine elektronische Steuereinheit (22) zur Regelung eines Reifendrucks umfasst und der Reifendruck in Abhängigkeit von der Zugkraft und/oder der Arbeitstiefe und/oder vom Schlupf regelbar ist.

2. Landwirtschaftliches Fahrzeug (10) nach Anspruch 1, **dadurch gekennzeichnet, dass** die Mittel zur Ermittlung oder Angabe des Schlupfes einen Radarsensor (38) umfassen.

3. Landwirtschaftliches Fahrzeug (10) nach Anspruch 1 oder 2, **dadurch gekennzeichnet, dass** die Mittel zur Ermittlung oder Angabe des Schlupfes ein Positionsbestimmungssystem (36) (GPS) umfassen.

4. Landwirtschaftliches Fahrzeug (10) nach einem der Ansprüche 1 bis 3,
**dadurch gekennzeichnet, dass** die Mittel zur Ermittlung oder Angabe der Zugkraft einen an der Anhängevorrichtung (21) angeordneten Kraftsensor (66) umfassen.

5. Landwirtschaftliches Fahrzeug (10) nach einem der Ansprüche 1 bis 4, wobei das Fahrzeug Mittel zur Ermittlung einer Arbeitstiefe eines an die Anhängevorrichtung (21) angehängten Anbaugeräts umfasst.

6. Landwirtschaftliches Fahrzeug (10) nach einem der Ansprüche 1 bis 5,
**dadurch gekennzeichnet, dass** Mittel (44, 27) zur Ermittlung der Fahrgeschwindigkeit vorgesehen sind und der Reifendruck in Abhängigkeit der Fahrgeschwindigkeit regelbar ist.

7. Landwirtschaftliches Fahrzeug (10) nach einem der Ansprüche 1 bis 6, wobei das Fahrzeug eine Eingabeeinrichtung (32) umfasst, mittels der Steuergrößen für eine oder mehrere der Steuereinheiten (22, 26) vorgebbar sind.

8. Landwirtschaftliches Fahrzeug (10) nach einem der Ansprüche 1 bis 7,
**dadurch gekennzeichnet, dass** in wenigstens einer der Steuereinheiten (22, 62) eine mathematische Gleichung oder wenigstens ein Kennfeld (82) abgelegt ist, durch welches ein oder mehrere der folgenden Parameter bei einer elektronischen Steuerung bzw. Regelung berücksichtigbar sind:
- Reifenart
- Bodenart
- Bodenbeschaffenheit
- Geschwindigkeit
- Achslastverteilung
